# EUROPÄISCHE PATENTSCHRIFT

(11) **EP 0 457 930 B1**
(45) Veröffentlichungstag und Bekanntmachung des Hinweises auf die Patenterteilung: **11.08.1993**
(21) Anmeldenummer: 90109528.1
(22) Anmeldetag: 19.05.1990
(51) Int. Cl.: C25D 21/20, B01D 1/26

(54) **Verfahren zur Reinigung von Spülwässern und Abluft bei Prozessen zur Oberflächenbehandlung**
Process for purifying rinsing water and exhausted gases by surface treatment processes
Procédé pour purifier les eaux de rinçage et les gaz dégagés dans les procédés de traitement de surface

(43) Veröffentlichungstag der Anmeldung: 27.11.1991
(73) Patentinhaber: Miljoevern-Umwelt-Technik Ingenieurgesellschaft mbH, 45525 Hattingen (DE); Schade, Horst, Dipl.-Ing., 45525 Hattingen (DE)
(72) Erfinder: Schade, Horst, D-4320 Hattingen (DE)
(74) Vertreter: Finkener und Ernesti Patentanwälte

(56) Entgegenhaltungen:
- FR-A- 2 365 359
- PLATING, Band 60, Nr. 2, Februar 1973, Seiten 153-156; H.R. FRIEDBERG: "Recycling and recovery of metal finishing wastes"

## Beschreibung

Die Erfindung betrifft ein Verfahren zur Reinigung von Spülwässern und Abluft mit gleichzeitiger Rückgewinnung von Wertstoffen und Spülwasser und minimalem Energieverbrauch bei Prozessen zur Oberflächenbehandlung, vorzugsweise elektrolytischen Beschichtungsverfahren, bei dem die Spülwässer und die ausgeschleppten Wertstoffe abfallarm unter Ausnutzung der notwendigen Prozeßenergie in die Behandlungsbäder zurückgeführt werden.

Aus der DE-OS 25 24 094 ist ein Verfahren zur Rückgewinnung von Wertstoffen aus industriellen Spülbädern bekannt, bei dem angereichertes Spülwasser verdüst, durch Verdunstung aufkonzentriert, das flüssige Konzentrat durch Abtrennung der Wertstoffe von den Fremdstoffen gereinigt und die Wertstoffe in das Behandlungsbad zurückgeführt werden. Auch bei dem aus der DE-PS 29 03 008 bekannten Verfahren zur Verdunstung und Wiedergewinnung von Wasser aus der wässrigen Lösung eines galvanischen Bades wird ein Verdunstungseindampfer verwendet und überschüssige Wärmeenergie dazu benutzt, die anfallenden wässrigen Lösungen zu erwärmen und/oder zu verdunsten.

Aus der DE-AS 26 42 836 ist es bekannt, ein flüssiges Medium in einer Hochdruckanlage unter Erhitzen einzudampfen und den hochgespannten Dampf zum Beheizen von betrieblichen Wärmeverbrauchern zu verwenden. Dabei wird das Konzentrat aus der Hochdruckanlage in einer Niederdruckanlage unter Entspannen weiter eingedampft und die Restwärme des für die betrieblichen Wärmeverbraucher verwendeten Dampfes zum Beheizen der Niederdruckanlage ausgenutzt. Diese und weitere bekannte Verfahren, bei denen Vakuumverdampfer zur Rückgewinnung von Elektrolyten oder Vakuumverdampfer mit Brüdenkompression bzw. Wärmepumpenanlagen benutzt werden, beziehen sich jeweils nur auf ein einzelnes Behandlungsbad einer Behandlungsanlage und schlagen für diese Stufe energiesparende Maßnahmen mit einer optimierten Spültechnik, z.B. durch Mehrfachkaskaden vor, um Wertstoffe aus wertvollen, z.B. edelmetall-, chromat- und nickelhaltigen Bädern zurückzugewinnen. Ganzheitliche Lösungen zur Minimierung des Abfallanfalls und des Energieverbrauches für Prozesse zur Oberflächenbehandlung sind bisher nicht bekanntgeworden.

Diese Aufgabe liegt der Erfindung zugrunde, deren Ziel es ist, eine Oberflächenbehandlungsanlage so auszubilden, daß sie abwasserfrei und abfallarm arbeitet und daß die für den Oberflächenbehandlungsprozeß notwendige Energie mehrfach genutzt wird, um die für den Gesamtprozeß notwendige Energie zu minimieren.

Ausgehend von einem Verfahren der eingangs beschriebenen Art besteht die Erfindung darin, daß die verschiedenen Spüllösungen, die bei einem Verfahren zur Oberflächenbehandlung in den Spülbädern anfallen, jeweils getrennt in einem Eindampfer einer mehrstufigen Eindampferanlage aufkonzentriert werden, wobei der in einem Eindampfer anfallende Dampf jeweils zur indirekten Beheizung in der nächsten Stufe mit geringerem Druck und damit niedrigerer Temperatur verwandt wird und die temperaturverträglichen Spüllösungen zuerst und abgestuft mit einem Temperaturgefälle von 10 bis 20° C von dem Überdruckbereich in den Unterdruckbereich der Eindampferanlage angeordnet werden und daß ein Energie-, ein Spülwasser- und ein Wertstoffkreislauf verwendet wird, indem:
a) das in den einzelnen Stufen anfallende Kondensat gesammelt, gereinigt und als Spülwasser zurückgeführt wird,
b) die in jeder Stufe anfallenden Wertstoffe getrennt eingedampft und in das Behandlungsbad der Oberflächenbehandlungsanlage zurückgeführt werden, aus der die Wertstoffe angefallen sind und
c) das Temperaturniveau der einzelnen Eindampfstufen einschließlich der vorgeschalteten Wärmeaustauscher so eingestellt wird, daß in der Behandlungsstufe anfallende überschüssige Energie zur Beheizung einzelner Eindampfphasen benutzt werden kann und bei der Eindampfung anfallende überschüssige Energie zur Beheizung von Behandlungsbädern der Oberflächenbehandlungsanlage genutzt wird.

Es hat sich überraschenderweise ergeben, daß durch Einsatz einer mehrstufigen Eindampfung eine äußerst wirtschaftliche Lösung der gestellten Aufgabe möglich ist, indem durch die für die Beheizung der Bäder der einzelnen Oberflächenbehandlungsstufen notwendigerweise erforderliche Energie oder die bei der elektrolytischen Oberflächenveredlung entstehende Wärme der größte Teil des Energiebedarfes gedeckt werden kann, der zur Eindampfung der Wertstoffe und Destillation der Spülwässer aufgebracht werden muß. Durch Einsatz von kontinuierlichen Sandfiltern zur Entfernung der Schadstoffe aus den Bädern ist es ferner möglich, Anschwemmittel oder Papierfilter und damit zusätzliche Sonderabfallstoffe zu vermeiden. Öle und Fette können durch Membranverfahren aus den Entfettungsbädern entfernt, aufkonzentriert und als Altöl ausgeschleust werden. Eisen, Aluminium, Blei und sonstige abgebeizte Metalle und Spurenelemente werden mit Oxidations- und Fällmitteln ausgefällt, wobei ein Teilstrom des Bades, z.B. durch Einsatz von Badinhaltsstoffen im optimalen pH-Bereich eingestellt wird, um ein Aufschaukeln von Neutralsalzen zu verhindern.

Es ist auch bei bester Spültechnik nicht möglich, zu vermeiden, daß Spuren der vorhergehenden Bäder in die nachfolgenden eingeschleppt werden und daß Fremdstoffe und Spurenelemente sich in den Bädern lösen. Auch können in den Bädern vorhandene organische Stoffe sich chemisch umsetzen und mit Aktivkohle oder anderen Adsorptionsstoffen sowie durch Oxidations- oder Reduktionsfällmittel, Membran- oder Elektrolyseverfahren nicht restlos entfernt werden. Ein Teil der Bäder muß daher, obschon die Standzeiten durch das erfindungsgemäße Verfahren wesentlich verlängert werden können, abgelassen werden. Ferner fällt durch Entsalzen des Zusatzwassers durch Verdunstung der Bäder Abwasser mit Neutralsalzen an.

Die abgelassenen Bäder sind jedoch von Schwermetallen weitgehend durch elektrolytische Verfahren befreit und werden dann einer Standneutralisation und Entgiftung unterworfen. Die entstehenden Fällungsprodukte wie Eisen- und Aluminiumsalze, bzw. Pulver-Aktivkohle können durch Filtration, z.B. in einer Kammerfilterpresse entfernt werden. Die Neutralsalze werden in einer Kristallisationsanlage aus dem Wasser herausgeholt und das Wasser zum Ansetzen der Bäder benutzt.

Bei einer bevorzugten Ausführungsform der Erfindung ist der ersten Stufe der mehrstufigen Eindampfanlage eine Kristallisationsanlage vorgeschaltet. Die Erfindung sieht ferner vor, daß die aus den Behandlungsbädern ablaufende Flüssigkeit in einem kontinuierlichen Sandfilter, das mit körnigem Filtermaterial gefüllt ist, einer Filtration unterworfen wird, wobei in dem Sandfilter sowohl die Feststoffe als auch pulverförmige Aktivkohle und/oder andere Adsorptionsmittel zurückgehalten werden.

Gemäß einem weiteren Merkmal der Erfindung werden die in dem kontinuierlichen Sandfilter anfallenden aufkonzentrierten Verschmutzungen in einer Entwässerungsmaschine, vorzugsweise einer Filterpresse direkt filtriert und entwässert, worauf die Wertstoffe mit destilliertem Wasser bei Einstellung eines geeigneten pH-Wertes ausgespült und zurückgewonnen werden.

Die Wertstoffe, vorzugsweise die Schwermetalle werden erfindungsgemäß durch Selektivaustauscher oder Ionenaustauscher gebunden, mit geeigneten Säuren aus dem Austauscher in konzentrierter Form zurückgewonnen und dem Oberflächenbeschichtungsbad als Wertstoff wieder zugeführt.

Ferner sieht die Erfindung vor, daß die im Prozeß niedergeschlagenen Metalle dem Elektrolytkreislauf, z.B. als Metalloxid bzw. Metallkarbonat kontinuierlich aufgegeben werden, wobei eine selektive Reinigung, insbesondere Ausfällung von Eisen durch Oxidation mit H₂O₂, Ozon (O₃) oder einer anderen oxidierenden Sauerstoffverbindung, die nicht aufsalzend wirkt, erfolgt und die Einstellung des pH-Wertes der sauren, z.B. Zink- bzw. Zn/Ni-Elektrolyten auf 3,5 bis 5,5 durch ZnO bzw. ZnCO₃ und/oder NiCO₃ vorgenommen wird.

Ferner wird das restliche Spülwasser erfindungsgemäß nach kurzzeitiger Rückspülung von Kies- und Aktivkohlefiltern und nach Ausschwemmung der größten Verschmutzungen über das kontinuierliche Sandfilter gereinigt und so die Rückspülwassermenge auf unter 20 % verringert.

Die Erfindung sieht ferner vor, daß die Wertstoffe (Badinhaltsstoffe) enthaltenden Abgase der Oberflächenbehandlungsbäder getrennt erfaßt und daß die Wertstoffe z.B. durch Filtration, Kondensation oder Auswaschen abgetrennt und der entsprechenden Eindampfstufe zur Rückgewinnung und selektiven Reinigung von Fremdstoffen zugeleitet werden.

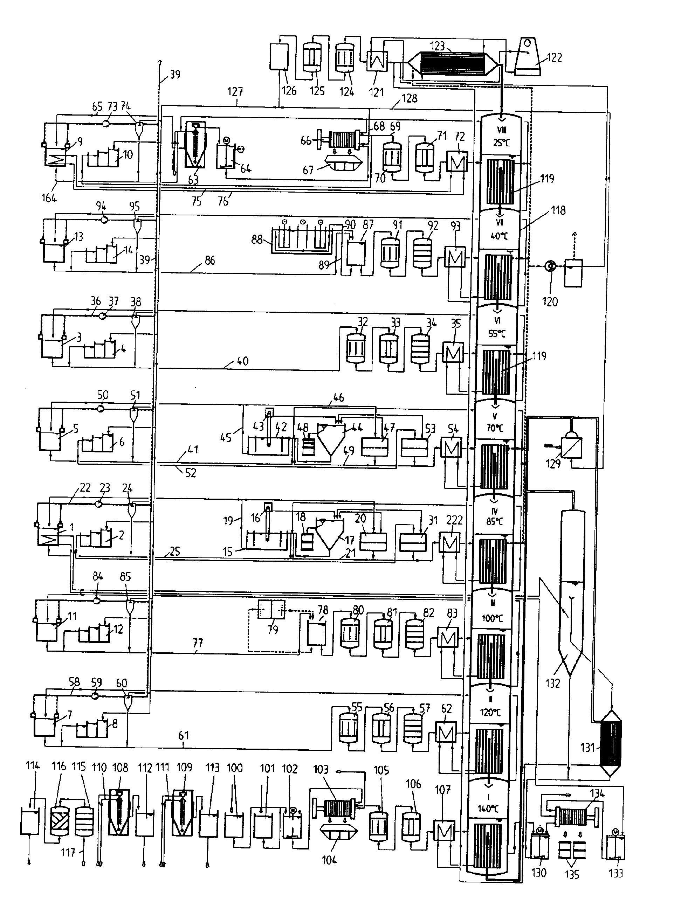

Das erfindungsgemäße Verfahren wird anhand der Zeichnung erläutert, auf der die Anwendung des Verfahrens bei einer Anlage zur Massenverzinkung, z.B. von Schrauben schematisch dargestellt ist. Das auf der Zeichnung nicht dargestellte zu verzinkende Gut wird in folgenden Behandlungsstufen einer Oberflächenbehandlung unterworfen:
1. Einer Heißentfettung (1) mit anschließender Kaskadenspülung (2),
2. einer Beize (3) mit anschließender Kaskadenspülung (4),
3. einer elektrolytischen Entfettung (5) mit anschließender Kaskadenspülung (6),
4. einer Dekapierung (7) mit anschließender Kaskadenspülung (8),
5. einer Verzinkung in dem Zinkbad (9) mit anschließender Kaskadenspülung (10),
6. einer Aufhellung (11) mit anschließender Kaskadenspülung (12) und
7. einer Chromatierung (13) mit anschließender Kaskadenspülung (14).

Die weitere Verarbeitung der in den einzelnen Behandlungsstufen anfallenden Flüssigkeiten wird wie folgt erläutert:

### 1. Heißentfettung

Das Heißentfettungsbad (1) fließt über einen Überlauf im freien Gefälle in einen tiefer stehenden Leichtstoffabscheider (15), der aus einer Zulaufkammer, einer Beruhigungszone und einer Kammer besteht, aus der die Emulsion abgezogen wird. In der Beruhigungszone wird das oben aufschwimmende Öl mit einem Bandskimmer (16) abgezogen und einem Ölabscheider (17) zugeführt. Die sich in dem Abscheider (15) unten absetzende Entfettungslösung wird über die Leitung (19) in das Heißentfettungsbad (1) zurückgepumpt. Ein wesentlich geringerer Teilstrom wird der Leitung (19) entnommen und in eine Ultrafiltrationseinrichtung (20) eingeleitet.

Das in dem Ölabscheider anfallende aufschwimmende Öl wird mit einem Schwimmer in ein Altölfaß (18) abgeleitet. Die in der Ultrafiltrationsanlage (20) herausgefilterte Öl-Emulsion wird wieder in den Ölabscheider (17) gegeben, während die in der Ultrafiltrationsanlage (20) zurückgewonnene Entfettungslösung zusammen mit der in dem Ölabscheider (17) anfallenden Lösung über eine Leitung (21) in den Leichtstoffabscheider (15) zurückgeführt wird.

Die in dem Heißentfettungsbad (1) anfallende Abluft wird über die Leitung (22) abgezogen und mittels eines Ventilators (23) über einen Naßfilter (24) geleitet; die darin abgeschiedenen Stoffe werden der vom Heißentfettungsbad (1) zum Leichtstoffabscheider (15) führenden Leitung (25) zugegeben. Der Überlauf der Kaskadenspülung (2) wird in eine zweite Ultrafiltrationsanlage (31) geleitet, in der Öle und Fette abgetrennt werden, die dem Ölabscheider (17) zugeführt werden. Das gereinigte Wasser wird zusammen mit einem Teilstrom der aus der ersten Ultrafiltrationsanlage (20) ablaufenden entölten Entfettungslösung über einen Vorwärmer (222) der Eindampfstufe IV einer Eindampferanlage aufgegeben.

### 2. Beize

Ein Teil des Beizbades der Beize (3) wird zusammen mit einem größeren Strom aus der Kaskadenspülung (4) über eine nicht dargestellte Vorlage durch eine Filtrationseinrichtung gepumpt, die aus einem Kiesfilter (32), einem Aktivkohlefilter (33) sowie einem Kationenaustauscher (34) besteht. Die die Filtrationseinrichtung verlassende Flüssigkeit gelangt über einen Vorwärmer (35) in die Eindampfstufe VI der Eindampferanlage.

Die Abluft des Beizbades wird über die Leitung (36) mittels eines Ventilators (37) über einen Naßfilter (38) abgesaugt. Die von den Inhaltsstoffen befreite Abluft gelangt in die Abluftleitung (39), während die in dem Filter zurückgehaltenen Inhaltsstoffe der von dem Beizbad zu der Filtrationseinrichtung führenden Leitung (40) zugegeben werden, in die auch der Ablauf der Kaskadenspülung (4) gelangt.

### 3. Elektrolytische Entfettung

Das Entfettungsbad der elektrolytischen Entfettung (5) fließt über einen Überlauf im freien Gefälle über die Leitung (41) in einen tiefer stehenden Leichtstoffabscheider (42), der in gleicher Weise ausgebildet ist wie der Leichtstoffabscheider (15).

Das oben aufschwimmende Öl wird mit einem Bandskimmer (43) abgezogen und einem Ölabscheider (44) zugeführt, während die sich unten absetzende Entfettungslösung wieder in das Entfettungsbad (5) zurückgeführt wird. Aus der Rückführleitung (45) wird ein wesentlich geringerer Teilstrom über eine Leitung (46) entnommen und einer Ultrafiltrationseinrichtung (47) zugeführt. Das in dem Ölabscheider (44) aufschwimmende Öl gelangt in ein Altölfaß (48). Die in der Ultrafiltrationsanlage (47) herausgefilterten Öle und Fette werden in den Ölabscheider (44) zurückgeführt, während die zurückgewonnene Entfettungslösung zusammen mit der in dem Ölabscheider anfallenden Lösung über eine Leitung (49) in den Leichtstoffabscheider (42) zurückgeleitet wird.

Die Abluft des elektrolytischen Entfettungsbades wird von einem Ventilator (50) über einen Naßfilter (51) in die Leitung (39) geleitet; die darin abgefilterten Stoffe gelangen über die Leitung (41) in den Leichtstoffabscheider (42).

Der Überlauf der Kaskadenspüle (6) wird über die Leitung (52) einer zweiten Ultrafiltrationsanlage (53) zugeführt. Die in dieser abgetrennten Öle und Fette werden dem Ölabscheider (44) aufgegeben, während das gereinigte Wasser sowie ein Teilstrom aus der Ultrafiltrationsanlage (20) über einen Vorwärmer (54) der Eindampfstufe V zugeführt wird.

### 4. Dekapierung

Ein Teil des in der Dekapierung (7) anfallenden Dekapierbades sowie ein größerer Strom aus der anschließenden Kaskadenspülung (8) werden über eine Leitung (61) und eine nicht dargestellte Vorlage durch eine Filtrationseinrichtung gepumpt, die aus einem Kiesfilter (55), einem Aktivkohlefilter (56) und einem Kationenaustauscher (57) besteht, der die abgebeizten Metalle des Grundwerkstoffes entfernt. Die Abluft des Dekapierbades wird über die Leitung (58) mittels eines Ventilators (59) abgesaugt und gelangt über einen Filter (60) in die Abluftleitung (39). Die in dem Filter zurückgehaltenen Inhaltsstoffe der Abluft werden über die Leitung (61) und die Vorlage über die Filtrationseinrichtung gefahren. Die aus der Filtrationseinrichtung ablaufende Flüssigkeit wird über einen Vorwärmer (62) der Verdampferstufe II der Eindampferanlage zugeführt.

### 5. Verzinkung

Das den Elektrolyten enthaltende Bad der Verzinkungsstufe (9) fließt in freiem Gefälle über die Leitung (164) in ein kontinuierliches Sandfilter (63). Der Schmutzwasserüberlauf des Sandfilters wird in eine Vorlage (64) mit einem langsam laufenden Rührwerk geleitet, in der dem Wasser Oxidationschemikalien und Chemikalien zugesetzt werden, die den pH-Wert so verschieben, daß die Verunreinigungen ausgefällt werden. Die größere Menge der in dem Sandfilter behandelten Flüssigkeit verläßt dieses als gereinigter Elektrolyt und wird über eine nicht dargestellte Vorlage über die Leitung (65) in das Bad zurückgepumpt. In der Vorlage wird über eine geeignete Dosiereinrichtung Zinkoxid (ZnO) nachdosiert. Aus der Vorlage (64) wird der Elektrolyt mittels einer Pumpe über eine Kammerfilterpresse (66) gefördert; das die Presse verlassende Filtrat gelangt über die nicht dargestellte Vorlage und die Leitung (65) in das Elektrolytbad der Verzinkungsstufe (9). Der in der Presse (66) anfallende Filterkuchen wird in einem Feststoffcontainer (67) gesammelt. Um noch Teile des Elektrolyten zurückzugewinnen, sieht die Erfindung ferner vor, den Filterkuchen der Kammerfilterpresse mit voll entsalztem Wasser zu spülen, das über die Leitung (68) in die Filterpresse eingeleitet wird. Das Spülwasser wird zusammen mit dem Überlauf der Kaskadenspülung (10) über die Leitung (69) über ein Kiesfilter (70) und ein Aktivkohlefilter (71) geleitet und gelangt über einen Vorwärmer (72) in die Endstufe VIII der Eindampfanlage.

Die Abluft des den Elektrolyten enthaltenden Bades wird mittels eines Ventilators (73) abgesaugt und über einen Naßfilter (74) der Leitung (39) zugeführt; die in dem Filter anfallenden Inhaltsstoffe werden über die Leitung (164) dem Sandfilter (63) zugeführt. Die Badwärme des Elektrolytbades der Verzinkungsstufe (9) wird genutzt, um zusätzliche Energie in den Vorwärmer (72) der Verdampferstufe VIII einzubringen. Dies geschieht in der aus der Zeichnung ersichtlichen Weise über die Leitungen (75 und 76).

### 6. Aufhellung

Ein Teil des in der Aufhellungsstufe (11) anfallenden Bades wird zusammen mit einem größeren Strom des Überlaufes der nachfolgenden Kaskadenspülung (12) über eine Leitung (77) gemeinsam einer Vorlage (78) zugeführt. Mit gestrichelten Linien ist ein durch eine Elektrolyse (79) geführter Kreislauf bezeichnet, der dazu dient, Wertstoffe zurückzuführen. Aus der Vorlage wird die Lösung über ein Kiesfilter (80), ein Aktivkohlefilter (81) und einen Kationenaustauscher (82) in einen Vorwärmer (83) gepumpt und gelangt aus diesem in die Eindampfstufe III der Eindampferanlage.Die Abluft des Aufhellungsbades wird mit einem Ventilator (84) abgesaugt und über ein Naßfilter der Leitung (39) zugeführt, während die vom Filter zurückgehaltenen Inhaltsstoffe über die Leitung (77) in die Vorlage (78) gegeben werden.

### 7. Chromatierung

Ein Teil des bei der Chromatierung (13) anfallenden Bades sowie ein größerer Strom der nachfolgenden Kaskadenspülung (14) werden über eine Leitung (86) gemeinsam einer Vorlage (87) zugeführt. Mit (88) ist eine Reoxidationseinheit bezeichnet, in der das III-wertige Chrom zu VI-wertigem Chrom oxidiert wird. Die Reoxidation läuft im Kreislauf über die Leitungen (89 und 90). Die aus der Vorlage abgezogene Lösung wird über einen Kiesfilter (91) und einen Kationenaustauscher (92) gepumpt und gelangt über den Vorwärmer (93) in die Eindampfstufe VII der Eindampfanlage. Die Abluft des Chromatierungsbades wird mittels eines Ventilators (94) über ein Naßfilter (95) in die Leitung (39) geleitet; die vom Filter zurückgehaltenen Inhaltsstoffe gelangen über die Leitung (86) in die Vorlage (87).

Die Behandlung des Konzentrates wird wie folgt vorgenommen:

Die Rückspülabwässer der Kies- und Aktivkohlefilter sowie der Ionenaustauscher werden in getrennten Vorlagen gesammelt. Die Vorlage für die sauren Konzentrate ist mit (100), die Vorlage für die alkalischen Konzentrate mit (101) bezeichnet. In einer nachgeschalteten Standneutralisation (102), die mit einem langsam laufenden Rührwerk versehen ist, können die Chromate, soweit dies noch nicht erfolgt ist, reduziert werden. Dies geschieht durch Zugabe von Reduktionschemikalien. Durch Zugabe von Fäll-, Oxidations- bzw. Reduktionschemikalien wird die Löslichkeit der Metalle reduziert. Der pH-Wert wird mit Hilfe der Neutralisationschemikalien eingestellt. Die aus der Standneutralisation abgezogenen Wässer werden einer Kammerfilterpresse (103) zugeführt, in der die Feststoffe durch Filtration entfernt werden. Der Filterkuchen fällt nach eventueller weitergehender Trocknung in der Filterpresse mit Heißluft in einen Feststoffcontainer (104) und wird entsorgt. Das salzhaltige Filtrat wird in einer nicht dargestellten Filtratvorlage aufgefangen und über ein Kiesfilter (105) und ein Aktivkohlefilter (106) gefahren, um die restlichen Verunreinigungen sowie organische Inhaltsstoffe zu entfernen. Anschließend gelangt das Filtrat über einen Vorwärmer (107) in die Eindampfstufe I der Eindampfanlage.

Die Rückspülung der Kies- und Aktivkohlefilter und die Regenerierung der Ionenaustauscher ist im linken unteren Abschnitt der Zeichnung dargestellt. Nach Entleeren eines Filters in die jeweilige Vorlage wird der Filter mit gebrauchtem Rückspülabwasser rückgespült, das jeweils getrennt nach alkalischem oder saurem Abwasser von je einem kontinuierlichen Sandfilter (108, 109) gereinigt wurde. Dem Sandfilter (108) wird saures Rückspülwasser über die Leitung (110), dem Sandfilter (109) alkalisches Rückspülwasser über die Leitung (111) zugeführt. Das Rückspülwasser wird in entsprechenden Vorlagen (112 bzw. 113) gesammelt, während das Schmutzwasser der Sandfilter in die jeweiligen Konzentratvorlagen (100 bzw. 101) geleitet wird. Anschließend wird der Filter mit voll entsalztem Wasser rückgespült, das anschließend dem jeweiligen Sandfilter (108 bzw. 109) zugeführt wird. Durch Unterteilen des Rückspülens wird Wasser eingespart.

Für das voll entsalzte Wasser steht eine ausreichend große Vorlage (114) zur Verfügung. Um Verdunstungsverluste in der Galvanik auszugleichen, wird über einen Kationen- und Anionenaustauscher (115) sowie über ein Mischbettfilter (116) Stadtwasser zugegeben, das über die Leitung (117) in den Anionenaustauscher (115) eingeleitet wird.

Die Eindampferanlage (118) besteht in üblicher Weise aus Verdampferkörpern (119) mit innen liegendem Heizregister und über den Verdampferkörpern angebrachten Kondensatoren.

Um die Energie optimal zu nutzen, ist die Eindampfeinrichtung mehrstufig aufgebaut, d.h. der Kondensator einer unteren Stufe dient gleichzeitig zur Beheizung der nächsten Stufe. Der Ringspalt zwischen dem Außenmantel des Verdampfers und dem Außenmantel des Heizregisters, also der eigentliche Verdampferkörper sowie die unter und über dem Heizregister liegenden Freiräume, die durch die jeweiligen Klöpperböden begrenzt werden und der zugehörige Kondensator besitzen immer denselben Druck. Die Kondensation findet an der Rohraußenseite statt. Der Heizkörper ist durch einen zylindrischen Mantel sowie eine Abdeck- und Grundplatte, in die die Rohre eingesetzt sind, abgedichtet. Der Druck in diesem System wird über eine oben in der Abdeckplatte sitzende Entlüftungsleitung eingestellt.

Das zu verdampfende Medium wird vor Eintritt in den Verdampferkörper auf eine Temperatur kurz unter der Siedetemperatur erwärmt. Es erfolgt ein Naturumlauf im Verdampfer, d.h. die Dampfblasen steigen in den Rohren auf, während die schwerere wässrige Phase absinkt, so daß eine Stapelung im unteren Teil des Verdampferkörpers nach der Dichte des zu verdampfenden Mediums entsteht.

Die schwere Phase (Konzentrate) wird aus dem unteren Teil des Verdampferkörpers mit einer geeigneten Pumpe abgezogen und in das jeweilige Bad zurückgeführt. Die leichte Phase (Dampf) kondensiert in dem Heizkörper (Kondensator), fließt an den Rohraußenwänden als Film ab und läuft über den Vorwärmer, um seine Energie zum Vorwärmen des Heizmediums der nächsten Stufe abzugeben. Bei der auf der Zeichnung dargestellten Ausführungsform werden acht hintereinander geschaltete Stufen I bis VIII benutzt, so daß die Energie achtfach genutzt werden kann. Pro Verdampferstufe wird ein Temperaturgefälle von 12 bis 20° C eingestellt. Die Einspeisung in die Verdampfer erfolgt nach dem Parallelstromprinzip.

In den oberen Verdampferstufen ist eine Fahrweise unter Vakuumbedingungen erforderlich, da einige Badchemikalien nur schonend eingedampft werden können und andererseits aufgrund des Temperaturgefälles der Druck in den oberen Stufen abnimmt. Der Unterdruck wird durch eine Vakuumpumpe (120) erzeugt, die zunächst das System evakuiert und anschließend nur noch Leckluftströme absaugt.

Die Heißdampfkondensate werden aus dem Verdampfer in einem gemeinsamen Kondensatsammelbehälter (121) gesammelt und mit Hilfe von Kühlwasser auf etwa 25 bis 30° C abgekühlt. Zu diesem Zweck ist ein Kühlturm (122) vorgesehen. Die Verdampfungsenthalpie des Dampfes aus der letzten Stufe wird ebenfalls mit Kühlwasser niedergeschlagen. Das Destillat aus dem Kopfkondensator (123) fließt ebenfalls dem Kondensat-Sammelbehälter (181) zu.

Von diesem Sammelbehälter gelangt das Destillat über eine Filteranlage, die aus einem Kiesfilter (124) und einem Aktivkohlefilter (125) besteht in eine geeignete Entsalzungsanlage (126). Die Entsalzung kann beispielsweise durch umgekehrte Osmose oder eine Kombination von Ionenaustauschern erfolgen. Das gereinigte Destillat wird über die Leitung (127) den einzelnen Kaskadenspülen zugeführt bzw. über die Leitung (128) in den Heißdampferzeuger (129) zurückgeleitet.

Die untere Stufe des Verdampfers wird dazu benutzt, die Kondensate einzudampfen. Zu diesem Zweck werden die aus dem Konzentratablauf der unteren Verdampferstufe ablaufenden Konzentrate in einer Vorlage (130) gesammelt und der Heizstufe (131) eines Kristallisators (132) zugeführt. Die Lösung wird mit einer nicht dargestellten Umlaufpumpe in Bewegung gehalten. Der Sumpf des Kristallisators (132) wird in einer Vorlage (133) gesammelt und über eine Kammerfilterpresse (134) geführt. Der Salzüberschuß wird als abfiltrierter Stoff in Salzfässer (135) gefüllt, während das salzhaltige Filtrat in die Vorlage (130) zurückläuft. Der den Kristallisator (132) verlassende Brüden dient wieder zur Beheizung der untersten Verdampferstufe.

Aus der vorstehenden Beschreibung ergibt sich der Energie-, Spülwasser- und Wertstoffkreislauf im Rahmen einer galvanischen Verzinkungsanlage. Die verschiedenen Spüllösungen werden in einer mehrstufigen Eindampfanlage jeweils getrennt in einem Eindampfer aufkonzentriert und der Dampf zur indirekten Erwärmung der nächsten Stufe mit Druck- bzw. Temperaturgefälle verwandt. Die Verdampfer sind dabei so angeordnet, daß jeweils die temperaturverträglichen Spüllösungen zuerst und abgestuft mit einem Temperaturgefälle von 10 bis 20° C aus dem Überdruckbereich im Unterdruckbereich angeordnet werden. Durch den elektrolytischen Prozeß entsteht Wärme, so daß das Zinkbad gekühlt werden muß. Die Kühlenergie wird im Vorwärmer (72) genutzt und das Vakuum im Eindampfer so eingestellt, daß dies möglich ist.

Auf der anderen Seite wird zum Aufheizen des Einfettungsbades (1) Wärme benötigt. Diese wird der vom Kristallisator (132) zur Vorlage (133) strömenden Flüssigkeit entnommen, die über eine Leitung (136) durch eine Heizschlange des Entfettungsbades (1) und von dort über die Leitung (137) in die Vorlage (133) geleitet wird.

Bei einer bevorzugten Ausführungsform der Erfindung wird die Kristallisation (131, 132) in die mehrstufige Eindampfanlage einbezogen, um die Mehrstufigkeit zu erhöhen und die Energiekosten für den Gesamtprozeß zu verringern.

Das Zinkbad (9) wird kontinuierlich über den Sandfilter (63) mit körnigem Filtermaterial filtriert. Zur Adsorption organischer Inhaltsstoffe wird Aktivkohle oder ein anderes geeignetes Adsorptionsmittel zudosiert, das in dem kontinuierlichen Sandfilter zurückgehalten wird. Auf diese Weise erfolgt gleichzeitig ein Filtrations- und ein Adsorptionseffekt.

Selektiv- bzw. Ionenaustauscher (z.B. 57) nehmen die Wertstoffe (Schwermetalle, Zink) auf. Mit einer geeigneten Säure, z.B. Salzsäure wird aus dem Austauscher Zinkchlorid in konzentrierter Form zurückgewonnen und dem Oberflächenbeschichtungsbad über die Vorlage (64) als Wertstoffelektrolyt zugeführt.

Ein Teil der im Prozeß niedergeschlagenen Metalle wird kontinuierlich dem Elektrolyt-Kreislauf, z.B. als Zinkoxid bzw. Zinkkarbonat in der Vorlage (64) zugeführt. Dabei wird der pH-Wert angehoben, um eine selektive Reinigung und Ausfällung von Eisen durch Oxidation im Bereich eines pH-Wertes von 3,5 bis 5 zu erzielen. Der Überschuß an Metallen im Elektrolytbad durch die kleinere Abscheidung an der Kathode wird durch Einsatz von inerten Anoden, z.B. Wasserstoffanoden gesteuert, so daß ein Teil der Metalle als Zinkoxid oder Zinkkarbonat bzw. in Form von Zinkchlorid aus dem Selektivaustauscher eingesetzt werden kann.

Die im Prozeß eingesetzten Kies- und Aktivkohlefilter werden in der beschriebenen Form mit Wasser rückgespült. Nach Ausschwemmung der größten Verschmutzungen wird das restliche Spülwasser über den kontinuierlichen Sandfilter gereinigt und so die Rückspülwassermenge auf unter 20 % verringert. Das anfallende Rückspülwasser wird in der Vorlage (112, 113) gestapelt und wieder für das Rückspülen benutzt.

Die anfallenden Abgase der Bäder enthalten Wertstoffe und Energie, die in der Abluft ausgetragen werden. Nach Abtrennung, z.B. durch Filtration, Kondensation oder Auswaschen in den Naßfiltern werden die Wertstoffe in dem Auswaschwasser zur Rückgewinnung und zur Selektivreinigung in die jeweiligen Stufen eingeleitet.

## Patentansprüche

1. Verfahren zur Reinigung von Spülwässern und Abluft mit gleichzeitiger Rückgewinnung von Wertstoffen und Spülwasser und minimalem Energieverbrauch bei Prozessen zur Oberflächenbehandlung, vorzugsweise elektrolytischen Beschichtungsverfahren, bei dem die Spülwässer und die ausgeschleppten Wertstoffe abfallarm unter Ausnutzung der notwendigen Energie in die Behandlungsbäder der Oberflächen behandlungsanlage zurückgeführt werden, dadurch gekennzeichnet, daß die verschiedenen Spüllösungen, die bei einem Verfahren zur Oberflächenbehandlung in den Spülbädern anfallen, jeweils getrennt in einem Eindampfer einer mehrstufigen Eindampferanlage aufkonzentriert werden, wobei der in einem Eindampfer anfallende Dampf jeweils zur indirekten Beheizung in der nächsten Stufe mit geringerem Druck und damit niedrigerer Temperatur verwandt wird und die temperaturverträglichen Spüllösungen zuerst und abgestuft mit einem Temperaturgefälle von 10 bis 20° C von dem Überdruckbereich in den Unterdruckbereich der Eindampferanlage angeordnet werden und daß ein Energie-, ein Spülwasser- und ein Wertstoffkreislauf verwendet wird, indem:
a) das in den einzelnen Stufen anfallende Kondensat gesammelt, gereinigt und als Spülwasser zurückgeführt wird,
b) die in jeder Stufe anfallenden Wertstoffe getrennt eingedampft und in das Behandlungsbad der Oberflächenbehandlungsanlage zurückgeführt werden, aus dem die Wertstoffe angefallen sind und
c) das Temperaturniveau der einzelnen Eindampfstufen einschließlich vorgeschalteter Wärmeaustauscher so eingestellt wird, daß in einer Behandlungsstufe anfallende überschüssige Energie zur Beheizung einzelner Eindampfphasen benutzt werden kann und bei der Eindampfung anfallende überschüssige Energie zur Beheizung von Behandlungsbädern der Oberflächenbehandlungsanlage genutzt wird.

2. Verfahren nach Anspruch 1, dadurch gekennzeichnet, daß der ersten Stufe der mehrstufigen Eindampfanlage eine Kristallisationsanlage vorgeschaltet ist.

3. Verfahren nach den Ansprüchen 1 und 2, dadurch gekennzeichnet, daß aus den Behandlungsbädern ablaufende Flüssigkeit in einem kontinuierlichen Sandfilter, das mit körnigem Filtermaterial gefüllt ist, einer Filtration unterworfen wird, wobei in dem Sandfilter sowohl die Feststoffe als auch pulverförmige Aktivkohle und/oder andere Adsorptionsmittel zurückgehalten werden.

4. Verfahren nach Anspruch 3, dadurch gekennzeichnet, daß die in dem kontinuierlichen Sandfilter anfallenden aufkonzentrierten Verschmutzungen in einer Entwässerungsmaschine, vorzugsweise einer Filterpresse direkt filtriert und entwässert werden, worauf die Wertstoffe mit destilliertem Wasser bei Einstellung eines geeigneten pH-Wertes ausgespült und zurückgewonnen werden.

5. Verfahren nach einem der Ansprüche 1 bis 4, dadurch gekennzeichnet, daß die Wertstoffe, vorzugsweise die Schwermetalle durch Selektivaustauscher oder Ionenaustauscher gebunden, mit geeigneten Säuren aus dem Austauscher in konzentrierter Form zurückgewonnen und dem Oberflächenbeschichtungsbad als Wertstoff wieder zugeführt werden.

6. Verfahren nach einem der Ansprüche 1 bis 5, dadurch gekennzeichnet, daß im Prozeß niedergeschlagene Metalle dem Elektrolytenkreislauf z.B. als Metalloxid/Metallkarbonat kontinuierlich aufgegeben werden, wobei eine selektive Reinigung, insbesondere Ausfällung von Eisen durch Oxidation mit H₂O₂, O₃ oder einer anderen oxidierenden Sauerstoffverbindung erfolgt, die nicht aufsalzend wirkt und die Einstellung des pH-Wertes der sauren z.B. Zink- bzw. Zn/Ni-Elektrolyten auf 3,5 bis 5,0 durch ZnO bzw. ZnCO₃ und/oder NiCO₃ vorgenommen wird.

7. Verfahren nach einem der Ansprüche 3 bis 6, dadurch gekennzeichnet, daß restliches Spülwasser nach kurzzeitiger Rückspülung von Kies- und Aktivkohlefiltern und nach Ausschwemmung der größten Verschmutzungen über das kontinuierliche Sandfilter gereinigt und so die Rückspülwassermenge auf unter 20 % verringert wird.

8. Verfahren nach einem der Ansprüche 1 bis 7, dadurch gekennzeichnet, daß die Wertstoffe (Badinhaltsstoffe) enthaltenden Abgase der Oberflächenbehandlungsbäder getrennt erfaßt und die Wertstoffe z.B. durch Filtration, Kondensation oder Auswaschen abgetrennt und der entsprechenden Eindampfstufe zur Rückgewinnung und selektiven Reinigung von Fremdstoffen zugeleitet werden.

## Claims

1. Process for the purification of surface treatment process, preferably electrolytic coating process, rinsing waters, with simultaneous recovery of substances which are of value and rinsing water and with minimal energy consumption, wherein the rinsing waters and the entrained substances which are of value are recycled with low wastage into the treatment baths of the surface treatment installation with full utilisation of the energy required, characterised in that the different rinsing solutions which arise in the rinsing baths in a surface treatment process are in each case separately concentrated in an evaporator of a multi-stage evaporation installation, wherein the vapour arising in one evaporator is in each case used for indirect heating in the next stage having lower pressure and concomitantly lower temperature, and the temperature-compatible rinsing solutions are first and in stages having a temperature drop of from 10 to 20°C arranged from the superatmospheric pressure zone into the subatmospheric pressure zone of the evaporation installation, and in that use is made of a circulation of energy, rinsing water and substances which are of value, wherein:
a) the condensate arising in the individual stages is collected, purified and recycled as rinsing water,
b) the substances which are of value arising in each stage are evaporated separately and recycled into that treatment bath of the surface treatment installation from which the substances which are of value arose and
c) the temperature level of the individual evaporation stages, including preceding heat exchangers, is adjusted in such a manner that excess energy arising in one treatment stage may be used for heating individual evaporation phases and excess energy arising in the course of evaporation is used for heating surface treatment installation treatment baths.

2. Process according to Claim 1, characterised in that a crystallisation installation precedes the first stage of the multi-stage evaporation installation.

3. Process according to Claims 1 and 2, characterised in that liquid draining out of the treatment baths is subjected to filtration in a continuous sand filter containing a charge of granular filter medium, wherein both the solids and also powdered activated carbon and/or other adsorption agents are retained in the sand filter.

4. Process according to Claim 3, characterised in that the concentrated contaminants arising in the continuous sand filter are directly filtered and dewatered in a dewatering machine, preferably a filter press, following which the substances which are of value are rinsed out with deionised water with adjustment of a suitable pH, and recovered.

5. Process according to one of Claims 1 to 4, characterised in that the substances which are of value, preferably the heavy metals, are bonded by means of selective exchangers or ion exchangers, recovered from the exchanger in concentrated form by use of suitable acids, and recirculated to the surface coating bath as a substance which is of value.

6. Process according to one of Claims 1 to 5, characterised in that metals deposited in the operation are continuously delivered to the electrolyte circulation, e.g. as metal oxide/metal carbonate, wherein a selective purification takes place, in particular precipitation of iron by oxidation with H₂O₂, O₃ or another oxidising oxygen compound which does not form salts, and the pH of the acidic, e.g. zinc or Zn/Ni electrolyte is adjusted to between 3.5 and 5.0 by ZnO or ZnCO₃ and/or NiCO₃.

7. Process according to one of Claims 3 to 6, characterised in that after brief back-washing of grit filters and activated carbon filters and after flushing out the major contaminants, the rest of the rinsing water is purified via the continuous sand filter and the quantity of back-wash water is thus reduced to below 20%.

8. Process according to one of Claims 1 to 7, characterised in that the surface treatment bath exhaust gases containing substances which are of value (bath ingredients) are captured separately and the substances which are of value are separated, by e.g. filtration, condensation or elutriation, and are fed to the appropriate evaporation stage for recovery and selective purification of foreign substances.

## Revendications

1. Procédé pour la purification des eaux de rinçage avec la récupération simultanée des matières valables et des eaux de rinçage et une consommation d'énergie minimum dans les procédés de traitement de surface, de préférence dans le procédé de revêtement électrolytique, dans lequel les eaux de rinçage et les matières valables entraînées sont ramenées ou recyclées en tirant profit de l'énergie nécessaire dans les bains de traitement de l'installation de traitement de surface, procédé caractérisé en ce que les différentes solutions de rinçage qui sont produites lors d'un procédé de traitement de surface dans les bains de rinçage, sont respectivement concentrées de façon séparée dans l'évaporateur d'une installation d'évaporation à plusieurs étages, la vapeur arrivant dans un évaporateur concentrateur étant respectivement utilisée pour le chauffage indirect à l'étape suivante à une pression relativement faible et par conséquent à une température relativement basse et les solutions de rinçage compatibles avec la température sont d'abord déplacés par paliers de chutes de température de 10 à 20°C depuis la zone de surpression vers la zone de dépression de l'installation d'évaporation et en ce que l'on utilise un circuit d'énergie, d'eau de rinçage et de substances valables :
a) en recueillant le condensat produit au cours des différentes étapes, en le purifiant et en le recyclant comme eau de rinçage,
b) les matières valables produites dans chaque étape sont concentrées par évaporation-séparément et sont recyclées dans le bain de traitement de l'installation de traitement de surface, à partir duquel ont été obtenues les matières valables, et
c) le niveau de température des différentes étapes de concentration par évaporation y compris celui des échangeurs de chaleur placés en amont est ajusté de manière à permettre l'utilisation de l'énergie excédentaire produite au cours d'une étape de traitement pour le chauffage des différentes phases de concentration par évaporation et l'énergie excédentaire produite lors de l'évaporation est utilisée pour le chauffage des bains de traitement de l'installation de traitement de surface.

2. Procédé selon la revendication 1, caractérisé en ce qu'une installation de cristallisation est disposée en amont de la première étape de l'installation d'évaporation à étages multiples.

3. Procédé selon les revendications 1 et 2, caractérisé en ce que le liquide s'écoulant à partir des bains de traitement dans un filtre sablé continu, lequel est garni d'une matière filtrante granulaire, est soumis à une filtration, le filtre sablé retenant aussi bien les matières solides que le charbon actif pulvérulent et/ou d'autres agents d'adsorption.

4. Procédé selon la revendication 3, caractérisé en ce que les impuretés concentrées produites dans le filtre sablé continu sont filtrées et déshydratées directement dans une machine de déshydratation, de préférence dans un filtre-presse, après quoi les matières valables sont rincées avec de l'eau distillée avec ajustement d'une valeur de pH appropriée et sont recyclées.

5. Procédé selon l'une des revendications 1 à 4, caractérisé en ce que les matières valables, de préférence les métaux lourds liés par échangeur sélectif ou échangeur d'ions, sont récupérées avec les acides appropriés à partir de l'échangeur sous forme concentrée et sont ramenées au bain de revêtement de surface-en tant que matières valables.

6. Procédé selon l'une des revendications 1 à 5, caractérisé en ce que les métaux précipités au cours du procédé sont amenés en continu au circuit d'électrolyte par exemple sous forme d'oxyde métallique/carbonate métallique, moyennant quoi une purification sélective, notamment une précipitation du fer par oxydation avec H₂O₂, O₃ ou avec un autre composé d'oxygène oxydant, n'ayant pas un effet salant et l'on procède à l'ajustement de la valeur du pH des électrolytes acides par exemple des électrolytes de zinc ou Zn/Ni à 3,5 jusqu'à 5,0 par ZnO ou ZnCO₃ et/ou NiCO₃.

7. Procédé selon l'une des revendications 3 à 6, caractérisé en ce que les eaux de rinçage restantes sont purifiées après un nouveau rinçage de courte durée par des filtres à gravier et à charbon actif et après nettoyage par un courant de liquide des principales impuretés, sont purifiées par le filtre sablé continu et la quantité d'eau de rinçage à contre-courant est diminuée à une valeur inférieure à 20 %.

8. Procédé selon l'une des revendications 1 à 7, caractérisé en ce que les gaz dégagés contenant des matières valables (matières constituant le bain) libérés des bains du traitement de surface sont recueillis séparément et les matières valables sont séparées par filtration, condensation ou lavage et sont amenées à l'étape de concentration par évaporation correspondante pour la récupération et la purification sélective des matières étrangères.
